# EUROPEAN PATENT SPECIFICATION

(11) **EP 4 279 276 B1**
(45) Date of publication and mention of the grant of the patent: **25.11.2026**
(21) Application number: 22173803.2
(22) Date of filing: 17.05.2022
(51) Int. Cl.: B33Y 40/20

(54) **DENTAL IMPLANTS**
ZAHNIMPLANTATE
IMPLANTS DENTAIRES

(43) Date of publication of application: 22.11.2023
(73) Proprietor: Dentsply Implants Manufacturing GmbH, 63457 Hanau (DE); DENTSPLY SIRONA Inc., York, PA 17401 (US)
(72) Inventor: Weitzel, Tim, Hanau (DE); Schultheis, Carsten, Hanau (DE); Rabenstein, Norbert, Hanau (DE)
(74) Representative: Allen, Caroline Margaret

(56) References cited:
- WO-A1-2009/004069
- WO-A1-2019/050392
- WO-A1-2022/079491
- WO-A2-2012/165987
- US-A- 5 954 505
- US-A1- 2004 234 925
- US-A1- 2008 160 483

## Description

### TECHNICAL FIELD

The present invention relates generally to dental implants.

### BACKGROUND

A dental implant is a medical component used for supporting a dental prosthesis or for acting as an orthodontic anchor. Dental prosthetics such as crown, bridge, or denture may be required to restore dental features of a patient. The so-called screw implants with a cylindrical or conical outer body are known. These screw implants usually exhibit an outer body surface which includes a thread as fixing means. The outer surface of the implant is often intentionally roughened in a manufacturing step to improve bone integration of the implant. Usually, dental implants include an inner lumen or opening for attaching and fastening an abutment as an intermediate piece between the implant and the prosthetic. Dental implants are usually made of metals or metal alloys such as titanium or from ceramics.

WO2022079491A1 shows an implant body with a first portion and a second portion, the first portion being positioned inside a cavity of the second portion so that there is a gap between the wall of the cavity and the first portion. The first portion is welded with the second portion at the coronal opening of the cavity.

US2008182227A1 disclosed a dental implant comprising an implant body providing with a central receiving opening, a structural element provided with a journal engaging in the receiving opening, and a tension bolt which penetrates a borehole of the structural element and is screwed into an inner thread located in the receiving opening.

DE3642901A1 disclosed a screw thread flank geometry which varies over the length of the implant.

US5667385A disclosed a method for treating the surface of surgical implants made of titanium or a titanium alloy, for instance dental implants, before implantation in bone tissue. The method results in a roughened exterior implant surface and at the same time a cleaning action is obtained, should there be any contaminants. The surface is blasted with particles of an oxide of titanium, preferably titanium dioxide. In this way an implant having an improved retention in bone tissue is obtained.

The geometry of a dental implant suitable for a patient depends on the patient's oral anatomy. Thus, an implant of proper dimensions is selected by the health practitioner dependent upon the dental condition of the patient. This may necessitate having a stock of dental implants of different sizes available to be able to provide the patient a suitable implant with minimum delay. If a suitable implant is not found in the inventory, it may be required to be ordered. This can result in significant delay for the patient before they can receive a treatment.

There is thus a need for improved dental implants and manufacturing process thereof.

### SUMMARY

At least some of the limitations associated with the foregoing can be overcome by the subject matter of the accompanying independent claims. At least some of the additional advantageous alternatives will be outlined in the dependent claims.

According to the present invention, there is provided an assembled dental implant according to Claim 1.

The applicant has realized that an outer body of the dental implant, or the implant body, can be mated with an insert or inlay part to result in a finished dental implant. This enables that the implant body and the insert can be manufactured with different dimensional specifications, yet they can be combined according to specific requirements of a patient. This can have an advantage that the number of implants to be kept in stock can be reduced. More specific synergistic alternatives are discussed later in the present disclosure. As it shall be disclosed, by additively manufacturing the implant body, further yet related benefits can be obtained. More specifically, when viewed from a first perspective, there can be provided a metallic dental implant body manufactured at least partially by an additive manufacturing process, wherein the body is provided with a cavity for receiving and sealably connecting to an inlay part thereby forming an assembled dental implant.

The dental implant body thus obtained can be sealably mated with the inlay part which suits the patient's requirements. For example, the inlay part may be required to meet requirements of the abutment which is to be connected to the inlay. The outer body dimensions such as length and/or outer diameter may be determined by the patient's jaw structure. The present teachings can thus allow creating the assembled dental implant which is customizable for the patient without requiring to keep in stock various combinations of inlay dimensions and implant body outer dimensions. The interface between different inlays and different implant bodies can be made with uniform dimensions, e.g., by a standardized or pre-determined size of the cavity such that different inlays are connectable sealably to any of the implant bodies. Thus, when sealably connected, an assembled dental implant can be obtained which meets the patient's needs.

Thus, according to the present invention, there is provided an assembled dental implant comprising:
a metallic body manufactured at least partially via an additive manufacturing process; wherein the body is provided with a cavity having an opening on one end of the body, and
an inlay part at least partly introduced within the cavity and sealably connected with the metallic body thereby sealing-off the cavity, wherein the inlay part is sealably connected with the metallic body by a weld seam (103) along the opening, wherein the sealable connection is at least partly formed by adhesive or epoxy; and
wherein the body is made of titanium or titanium alloy.

According to an aspect, the body is made from titanium or titanium alloy. This can have an advantage that better biocompatibility is achieved with the biological structures of the patient. Similarly, preferably, the inlay part is made of titanium or titanium alloy, however it is not a requirement. The applicant has, however, realized that there can be an additional benefit of having the body and the inlay part made of titanium or titanium alloy, in that both parts can provide a better sealed connection.

The applicant has realized in this domain another synergistic effect of metallic implant bodies which have been manufactured at least partly by an additive manufacturing process. The metallic bodies which have been additively manufactured, more specifically in a layer-by-layer manner develop an uneven texture which works very well as a roughened surface of the assembled dental implant. Accordingly, a separate manufacturing process, such as blasting, for roughening the outer surface of the implant can be avoided. This can save costs and production time. Hence, according to an aspect, the body's outer surface retains texture from the additive manufacturing process. Furthermore, the additive manufactured body's outer surface has a rougher surface structure than the inlay part's surface. The applicant has found selective laser melting ("SLM") to be especially advantageous for additively manufacturing the body, more preferably SLM using titanium in granular or powder form. More specifically, the applicant by inventive effort has found that complex structures such as undercuts can be realized better with SLM, which can allow an improved osseointegration of dental implants.

According to an aspect, the cavity is at least partially formed by machining the body after the additive manufacturing process. Thus, after the structure of the outer body is realized using the additive manufacturing process, the cavity can be machined, e.g., by any one or more steps such as drilling, turning, boring, and/or polishing. The machining process can be used to provide a standardized or pre-determined interface mating with the inlay part. There can be an advantage of providing a smooth surface at the interface between the body and the inlay part as it can provide a better sealable connection.

Alternatively, or in addition, the machining may involve providing mutually engageable structures along the outline of cavity and the corresponding mating surface of the inlay part. The engageable structures may be in the form of one or more grooves one part and its complementing structure on the other part. The engageable structures may be straight, or they may be curved, e.g., in helix form. The engageable structures may even be in the form of threads, such that the machining may involve providing internal threads, at the cavity, for connecting to the inlay part in screwable manner. As it shall be appreciated, in this case, the inlay part may be provided matching threads to engage with the internal threads for establishing the connection. An advantage of the engageable structures, especially threads can be that the connection can be made more robust against lateral forces between the implant body and the inlay part. Moreover, the sealable nature of the connection can be improved by virtue of the threads acting as mechanical seal.

The sealable connection between the implant body and the inlay part involves, at least partly, a fusion based manufacturing process that is welding and eventually such as brazing and/or soldering. The applicant has found laser welding to be advantageous processes for realizing the sealable connection between the implant body and the inlay part. Specifically for the present purpose of manufacturing a dental implant, the applicant has realized with inventive effort that use of any additives like glue can be significantly reduced by using laser welding. In the proposed dental implants pursuant to the present teachings, laser welding can provide a sufficiently strong and sealed structure such that any additional bonding material can be substantially reduced. This can have a positive effect on biocompatibility of the implant as the assembled implant can be realized e.g., entirely made of Ti or Ti-alloy. Another advantage can be enhanced durability of the implant as any aging effect of a material such as glue affects to a negligible degree, the bonding strength between the two parts. Moreover, as compared to shrink fitted connections, laser welded implants can better adjust to production tolerances between the two connected parts, i.e., the inlay part and the implant body part.

The welding may even be spot welding, or any suitable fabrication method which allows a sealable connection between the two parts. The sealable connection prevents ingress of foreign matter or bioaccumulation in the cavity, and ideally in any space between the body and the inlay part. The sealable connection thus ideally provides a hermetically sealed connection between the body and the inlay such that the cavity is isolated, or fully closed, from outside. Hence, the cavity is ideally sealed-off by the sealable connection between the two parts.

In addition, the sealable connection involves gluing the inlay part in the cavity. This can for example be done by filling the cavity at least partially by a suitable adhesive or epoxy and then hardening it. When combined with the fusion based manufacturing process, this can have an additional advantage that the cavity is essentially fully filled by the adhesive or glue such that ingress of foreign matter may no longer be an issue. The body and the inlay can thus become more like a continuous solid volume.

In an alternative aspect, which does not correspond to the present invention, the sealable connection may involve contracting the body over the inlay part. For example, after additive manufacturing the body, preferably after machining, the body is exposed to higher temperatures as compared to the inlay part such that the body material is thermally expanded as compared to the inlay. By providing the interface such that at the same or similar temperatures the dimensions of the cavity match the dimensions of the inlay or are slightly smaller as compared to the inlay, the body which is warmer than the inlay will allow the inlay to more easily enter the cavity, however when the two parts are then at the same temperature, the body will contract over the inlay thus tightly closing-off the cavity.

Ideally, the inlay part is arranged to connect to the body in a flushed manner. Hence, a mechanical discontinuity is prevented at the interface, i.e., between the end of body structure and the start of the inlay part structure. This can make the dental implant more resistant to bioaccumulation at the interface, and hence more hygienic.

According to an aspect, the inlay part is manufactured via a machining process involving turning, especially using a CNC machine.

According to an aspect, the inlay part is provided with an inner bore. Optionally, the inner bore may be provided with thread and/or an indexing geometry. The inner bore can provide additional structural support to the inlay part by engaging with a complementary structure attached to the body but located within the cavity. The thread of the inner bore can further enhance the stability and robustness of the connection. The indexing geometry allows aligning the body and the inner part relative to each another at a desired position.

When viewed from another perspective, there can also be provided a method for assembling a dental implant, which method comprises:
- providing a metallic body at least partially manufactured via an additive manufacturing process;
- providing a cavity with an opening in the body during the additive manufacturing process and/or by machining the body after the additive manufacturing process;
- inserting an inlay in the cavity via the opening;
- connecting the inlay to the body and sealing-off the cavity.

This can result in a dental implant produced in shorter time and with other advantages in production time and with reduced production steps and with improved freedom of implant sizes.

"Cavity" in the present disclosure refers to a hollow space provided along the longitudinal or implant axis of the implant body. The cavity has an opening on at one end of the body for receiving and sealably connecting the insert part. At least a part of the cavity's surface is designed to be in contact with the insert. Preferably, the surfaces are complementary in nature for improving the sealable connection. The cavity may at least partly be cylindrical in profile. Alternativity, or additionally, the cavity may at least partly be conical in profile. The cavity may be provided with structures for engageably connecting with complementary structures provided at the outer surface of the inlay part. During the manufacturing process, the cavity may be filled with material such as an inert gas and/or adhesive or epoxy. In some cases, the sealable connection may be provided under vacuum such that there is negative pressure at any free space in the cavity after forming the sealable connection with respect to the ambient pressure. This can improve the sealable connection especially when certain kind of profile is provided at the interface, e.g., a tapered profile with the cavity perimeter being largest at the opening and reducing along the length going inwards in the body.

### BRIEF DESCRIPTION OF THE SEVERAL VIEWS OF THE DRAWINGS

Certain aspects of the present teachings will now be discussed with reference to the accompanying drawings that explain said aspects by the way of examples. Since the generality of the present teachings is not dependent on it, the drawings may not be to scale. Method and system aspects may be discussed in conjunction for ease of understanding. Certain features shown in the drawings may be logical features that are shown together with physical features for the sake of understanding and without affecting the generality or scope of the present teachings.
FIGS. 1 show different views of an assembled dental implant;.
FIGS. 2 show different examples of dental implant assemblies and inserts;
FIGS. 3 show another example of an assembled dental implant and its components.

### DETAILED DESCRIPTION

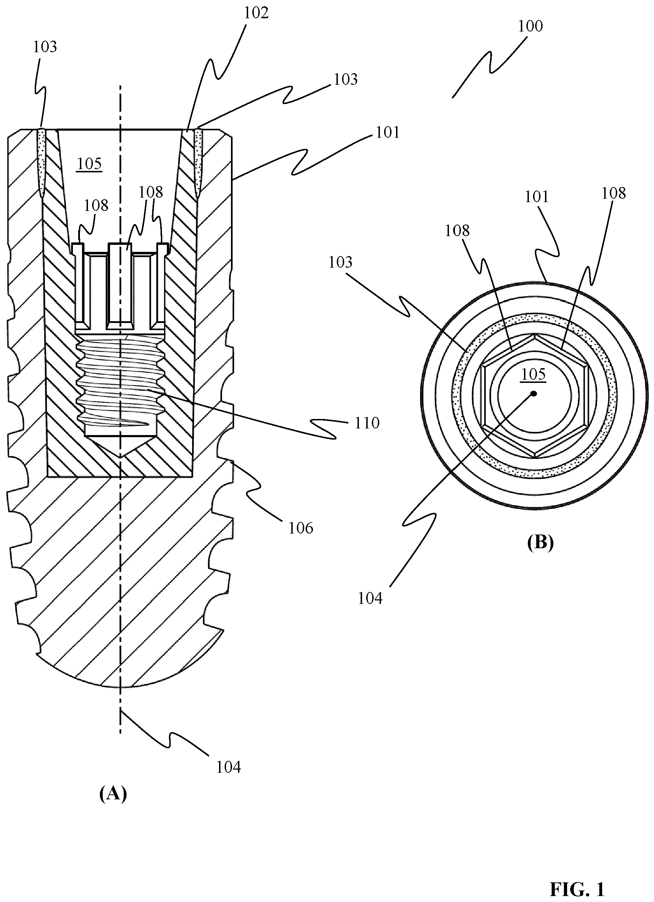

FIG. 1(A) shows a cross-sectional side view of an assembled dental implant or a dental implant assembly 100. The dental implant assembly 100 comprises a metallic body 101. The body 101 is manufactured at least partially via an additive manufacturing process. The outer implant body 101 is provided with a cavity, which in this example is shown occupied by an inlay part 102. The inlay part 102 may also be called an *inlay* or an *inner implant body.* The inlay is provided an opening 105 located along an axis 104 along the length of the body 101. The opening or inner bore 105 is used for fixing structure such as an abutment to the implant 100. The implant 100, or more specifically the body 101, is also provided structures 106 shown here as threads on its outer surface for interfacing and anchoring with the bone of the jaw of a patient. The implant 100, or more specifically the inlay 102, is also provided connection geometry 108, 110 in the inner bore 105 for connecting to a suitable fixing structure such as an abutment. More specifically, the connection geometry may comprise indexing structure 108 for aligning the implant 100 with respect to the fixing structure. Alternatively, or in addition, the connection geometry may comprise internal threads 110 for mating with the matching threads on the fixing structure. An advantage of the implant 100 as proposed, realized with the body 101 and the inlay 102, is that different versions of the body 101 and the inlay 102 can be manufactured independently of each another and they can be combined to build customized implants for a given patient without requiring a comprehensive inventory. For example, the body 101 may be manufactured independently with different features, for example material and/or implant length and/or thickness and/or pitch and/or depth of outer threads 106. Similarly, the inlay 102 may be manufactured independently with different features, for example material and/or inlay length, size of the opening 105 and/or pitch and/or depth of inner threads 110 and/or size and/or type of the indexing structure 108. According to the specific needs of a patient, a given version of the body 101 can be provided with a given version of the inlay 102 thus enabling a more suitable implant 100 to be provided to the patient whilst keeping lower inventory which essentially would otherwise require each and every combination of the inner geometries 108, 110 and the outer geometries, e.g., 106 to be kept in stock to provide similar service to the patient. An additional advantage of the additively manufactured body 101 is that a roughening step for the outer surface of the body 101 can be prevented, thus saving costs and time. The outer surface of the body 101 preferably retains texture from the additive manufacturing process. Advantageously, the additive manufacturing process involves selective laser melting. Further advantageously, the body 101 is made of material which is titanium or titanium alloy. The material preferably has a titanium content of at least 70% wt. titanium, more preferably at least 85% wt. titanium. For example, the material may be conforming to Grade 5 Titanium alloy as specified by ASTM International Standard, or Grade 2. At the writing of this disclosure, Grad 5 corresponds to an alloy which contains 3.5 - 4.5% Vanadium, 5.5 - 6.75% Aluminum, maximum 0.3% Iron, maximum 0.2% Oxygen, maximum 0.08% Carbon, maximum 0.05% Nitrogen, maximum 0.015% Hydrogen, maximum 0.005% Yttrium, and the balance maximum % Titanium (all percentages in wt. %). Grade 5 alloy is also called TI-6Al-4V. Similar alloys such as TI-6AL7NB or ASTM F1295 are also usable. Similarly, Grade 2 Ti alloy is also usable, e.g., conforming to ASTM B265 or ASTM B348, containing max. 0.3% Fe, max. 0.08% C, max. 0.25% O, max. 0.03% N, max. 0.015% H, and balance max. % Ti (all percentages in wt. %). Similarly, the inlay 102 is made of material which is titanium or titanium alloy. Preferably, the body 101 and the inlay 102 are made of the same or essentially similar material.

As discussed, the body 101 receives and sealably connects to the inlay 102 via the cavity. The sealable connection provided via a welded connection. The welded connection includes a weld seam 103 which is made along the circumference around the cavity. The circular profile of the weld seam 103 can be better appreciated from a top view, or abutment side, of the dental implant assembly 100 shown in FIG. 1(B). It shall be appreciated that the sealable connection can at least partially be provided by the mating surface of the inlay 102 with the body 101, i.e., portion of the inner surface of the body 101 which mates with the inlay 102. In this example, the inlay 102 is provided a tapered profile along the length of the body 101. The inner surface of the body 101, especially the surface which mates with the inlay 102, may be mechanically smoothened or polished. Similarly, the outer surface of the inlay 102, especially the surface which mates with the body 101, may also be mechanically smoothened or polished to allow a tight interface and thus a better sealable connection. Alternatively, or in addition, the mating surfaces of the body 101 and the inlay 102 may be providing engaging elements or structures for a better sealable connection. For example, unlike as shown in FIG. 1(A), the inlay 102 may be screw-mounted into the body via corresponding threaded features on the outer surface of the inlay 102 and the inner surface of the body 101. The engaging elements or features may be of any suitable type, such as labyrinth seal, screw lock, ratchet mechanism or their likes. The cavity may at least partially be formed during the additive manufacturing process, and/or it may be formed by machining the body 101 after the additive manufacturing process. Even if the cavity is formed during the additive manufacturing process, a machining process may still be applied for smoothing and/or machining the engaging features on the inner surface of the body 101. Similarly, the inlay 102 may be machined for surface smoothing and/or engaging elements and/or opening 105 and/or

Thus, for forming the assembly 100, the inlay 102 is introduced along the longitudinal or implant axis 104 into the cavity of the body 101 such that the outer surface of the inlay 102 mates with the inner surface of the body 101. In some cases, the cavity may be filled with a sealing material such as an adhesive, filler or epoxy prior to introducing the inlay 102 for creating a void free connection between the inlay 102 and the body 101. In some cases, the mating surface of the inlay 102 and/or the body 101 may be provided an adhesive or a sealant for at least partially forming the sealable connection. In addition, a welded connection is provided for the sealable connection. A weld is performed along the periphery of the body 101 at or around the abutment end of the implant such that the thus resulting welding seam 103 seals off the cavity. Welding may be of any suitable type, as mentioned, laser welding and/or spot welding. Advantageously, the welding process involves laser welding. Additionally, other sealing methods such as brazing may also be contemplated. As can be seen, the body 101 and the inlay 102 are coaxially assembled along the implant axis 104.

As can be seen from FIG. 1(B), the inlay 102 and the cavity when viewed from the abutment side have a circular profile. It can be seen that the weld seam 103 follows the circular profile. Those skilled in the art shall appreciate that other profiles are also possible, for example, elliptical, square, rectangular or any other symmetrical or asymmetrical profiles, e.g., polygonal profiles. An advantage of symmetrical polygonal profiles can be that the inlay 102 can be aligned at fixed locations with respect to the body 101. Additionally, a non-circular profile can also be advantageous in providing additional resistance against unwanted rotation of the inlay 102 with respect to the body 101. For example, when screwably inserting the implant 100 into a patient's jaw, a non-circular profile can provide structural support additional to that provided by the sealable connection (i.e. weld and adhesive). An advantage of the circular profile is that it can provide most freedom to arrange the position of the inlay 102 relative to the body 101. A compromise can be a symmetrical polygonal profile such as square, pentagonal or hexagonal, which can provide fixed positions at which the inlay 102 can be arranged with respect to the body 101.

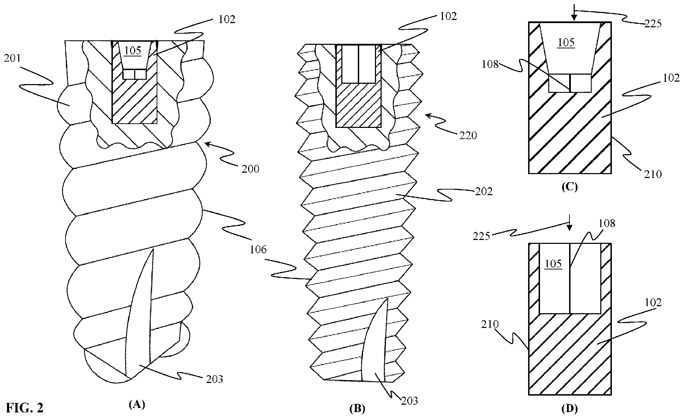

FIGS. 2 show other examples of dental implant assemblies 200, 202 and inlays 102. In FIG. 2(A) a first assembled dental implant 200 is shown, which has a more rounded geometry 106. The first dental assembly 200 comprises an outer body 201 and an inlay part 102 which is flush mounted with the inner surface of the body 201. **In** this example, the inlay 102 completely occupies the cavity. The sealable connection is adhesive based and welding based. An advantage of completely filling the cavity is that there is no space left for any ingress of unwanted material in the implant 200 between the body 201 and the inlay 102. The body 201 is shown also with a thread cutting feature 203, for example for removing material while screw mounting the implant 200 into a patient's jaw.

FIG. 2(B) shows a second dental implant 220. The second implant 220 has sharper threads 106 as compared to those of the first implant 200. The second implant 220 is also shown provided with a thread cutting feature 203. Similar to the first implant 200, the second dental assembly 220 comprises an outer body 202 and an inlay part 102 which is flush mounted with the inner surface of the body 202. Also in this case, the inlay 102 completely occupies the cavity in the body 202.

FIG. 2(C) shows a closer view of the inlay 102 which was used in the first implant 200. The inlay 102 has an outer surface 210 which in this case is a polished surface. The inlay 102 may have a circular or non-circular profile, i.e., circular or non-circular shape, e.g., polygonal, when viewed from the abutment side 225. The inlay 102 in this case has an indexing structure or geometry 108 at the end of the opening or inner bore 105.

FIG. 2(D) shows a closer view of the inlay 102 which was used in the second implant 220. The inlay 102 has an outer surface 210 which in this case is a polished surface. In this case too, the inlay 102 may have a circular or non-circular profile, i.e., circular or non-circular shape, e.g., polygonal, when viewed from the abutment side 225. The inlay 102 in this case has an indexing structure 108 which extends from the abutment end 225 of the inlay 102 till the end of the opening 105.

As it was discussed, the profile of the cavity of the respective body 201 or 202 will match the profile of the corresponding inlay 102.

Assuming that the inlays 102 shown in FIGS. 2 have same or essentially same outer dimensions and profiles, it shall be appreciated that the inlay of FIG. 2(C) can also be usable with the implant body 202 of FIG. 2(B). Similarly, the inlay of FIG. 2(D) can also be usable with the implant body 200 of FIG. 2(A). Thus, by having just two bodies 200 and 202 and two different inlays of FIGS. 2(C) and (D), four different implants can be realized. Advantageously, uncommon type of implants even if not realized, their parts, i.e., bodies and inlays can be kept in stock, but used as and when needed for other implants which require one these parts. Thus, implant production is made more efficient.

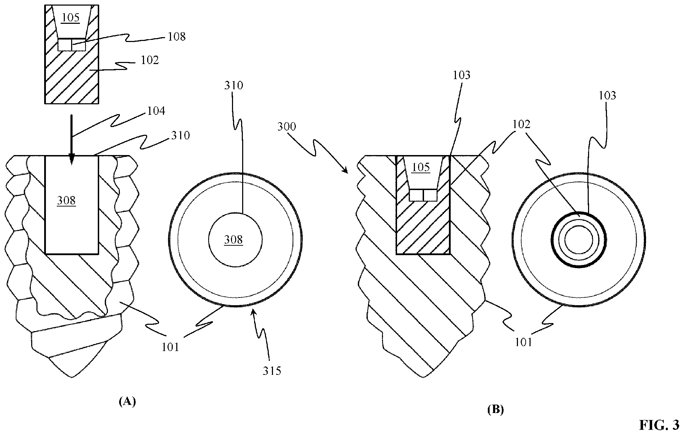

FIGS. 3 show a method of assembling a dental implant 300 pursuant the present teachings. The dental implant 300 is similar to those shown in the previous FIGS. Initially, a metallic body 101 is provided, which has been manufactured at least partially via an additive manufacturing process. Advantageously, the additive manufacturing process involves selective laser melting. The body 101 is provided with a cavity 308 at least partially during the additive manufacturing process and/or by machining the body 101 after the additive manufacturing process. The cavity 308 has an opening 310 on one side of the body 101, more specifically on the abutment side. In this example, the cavity is shown with a circular profile, but as discussed previously other profiles are also possible. Thus, the opening 310 leading to the cavity 308 in this case has a circular profile, which can be better appreciated in the view 315 shown from the abutment side of the body 101 in FIG 3(A). An inlay 102 is inserted along the implant axis 104 into the cavity 308 via the opening 310. After inserting, the inlay 102 is connected to the body 101 in such a manner that the cavity 308 is sealed-off. The sealing connection is made by welding, by providing a weld seam 103 along the opening and eventually along the outer surface of the body 101.

In addition the sealable connection is realized by adhesive or epoxy (e.g. gluing or cementing). In an alternative aspect which does not correspond to the present invention, the sealable connection may be realized via friction fitting. Welding is preferably laser welding, but e-beam welding and other welding methods may also be used alternatively or in addition. The inlay 102 may be produced by CNC manufacturing process such as turning and milling. Alternatively, or in addition, the inlay may be produced at least partially via an additive manufacturing process.

The method steps may be performed in the order as shown listed in the examples or aspects. It should be noted, however, that under specific circumstances a different order may also be possible. Further, it is also possible to perform one or more of the method steps once or repeatedly. These steps may be repeated at regular or irregular time periods. Further, it is possible to perform two or more of the method steps simultaneously or in a timely overlapping fashion, specifically when some or more of the method steps are performed repeatedly. The method may comprise further steps which are not listed.

The word "comprising" does not exclude other elements or steps, and the indefinite article "a" or "an" does not exclude a plurality. A single processing means, processor or controller or other similar unit may fulfill the functions of several items recited in the claims. The mere fact that certain measures are recited in mutually different dependent claims does not indicate that a combination of these measures cannot be used to advantage. Any different signs in the claim should not be construed as limiting the scope.

Further, it should be noted that in the present disclosure, the terms "at least one", "one or more" or similar expressions indicating that a feature or element may be present once or more than once typically may have been used only once when introducing the respective feature or element. Thus, in some cases unless specifically stated otherwise, when referring to the respective feature or element, the expressions "at least one" or "one or more" may not have been repeated, notwithstanding the fact that the respective feature or element may be present once or more than once.

Further, the terms "preferably", "more preferably", "particularly", "more particularly", "specifically", "more specifically" or similar terms are used in conjunction with optional features, without restricting alternative possibilities. Thus, any features introduced by these terms are optional features and are not intended to restrict the scope of the claims in any way. The present teachings may, as those skilled in the art will recognize, be performed by using alternative features. Similarly, the features introduced by "according to an aspect" or similar expressions are intended to be optional features, without any restriction regarding alternatives to the present teachings, without any restrictions regarding the scope of the present teachings and without any restriction regarding the possibility of combining the features introduced in such way with other optional or non-optional features of the present teachings.

Unless otherwise defined, all technical and scientific terms used herein have the same meaning as commonly understood by one of ordinary skill in the art to which the present teachings belong.

Various examples have been disclosed above for a metallic dental implant body, an assembled dental implant and a manufacturing method thereof. For example, it has been disclosed an assembled dental implant comprising a metallic body manufactured at least partially via an additive manufacturing process; wherein the body is provided with a cavity having an opening on one end of the body, and an inlay part at least partly introduced within the cavity and sealably connected with the metallic body thereby sealing-off the cavity. The present teachings also relate to the metallic dental implant body and manufacturing methods.

The scope of the present invention is defined by the appended claims.

## Claims

1. An assembled dental implant comprising:
a metallic body (101, 201) manufactured at least partially via an additive manufacturing process, wherein the body is provided with a cavity having an opening (105) on one end of the body; and
an inlay part (102) at least partly introduced within the cavity and sealably connected with the metallic body thereby sealing-off the cavity,
wherein the inlay part is sealably connected with the metallic body by a weld seam (103) along the opening, wherein the sealable connection is at least partly formed by adhesive or epoxy; and
wherein the body is made of titanium or titanium alloy.

2. The assembled dental implant of claim 1, wherein the inlay part (102) is made of titanium or titanium alloy.

3. The assembled dental implant of any of the above claims, wherein the cavity is formed by machining the body (101, 201) after the additive manufacturing process.

4. The assembled dental implant of any of the above claims, wherein the additive manufacturing process involves selective laser melting.

5. The assembled dental implant of any of the above claims, wherein the weld seam is at least partly formed by laser welding the inlay part (102) to the body (101, 201).

6. The assembled dental implant of any of the above claims, wherein the body's (101, 201) outer surface retains texture from the additive manufacturing process.

7. The assembled dental implant of any of the above claims, wherein the additive manufactured body's (101, 201) outer surface has a rougher surface structure than the inlay part's (102) surface.

8. The assembled dental implant of any of the above claims, wherein the inlay part (102) has an inner bore.

9. The assembled dental implant of claim 8, wherein the inlay part (102) has a thread in the inner bore.

10. The assembled dental implant of claim 8 or 9, wherein the inner bore provides an indexing geometry (108, 110).

11. The assembled dental implant of any of claims 8 to 10, wherein the inner bore is adapted to connect to an abutment.

12. The assembled dental implant of any of the above claims, wherein the adhesive is provided within the cavity.

## Patentansprüche

1. Zusammengesetztes Zahnimplantat, umfassend:
einen Metallkörper (101, 201), der zumindest teilweise über ein additives Fertigungsverfahren gefertigt wird, wobei der Körper mit einem Hohlraum bereitgestellt ist, der an einem Ende des Körpers eine Öffnung (105) aufweist; und
ein Inlay-Teil (102), das zumindest zum Teil in den Hohlraum eingeführt ist und abdichtend mit dem Metallkörper verbunden ist, wodurch der Hohlraum abgedichtet wird,
wobei das Inlay-Teil über eine Schweißnaht (103) entlang der Öffnung abdichtend mit dem Metallkörper verbunden ist, wobei die abdichtbare Verbindung zumindest zum Teil durch Klebstoff oder Epoxidharz gebildet ist; und
wobei der Körper aus Titan oder einer Titanlegierung hergestellt ist.

2. Zusammengesetztes Zahnimplantat nach Anspruch 1, wobei das Inlay-Teil (102) aus Titan oder einer Titanlegierung hergestellt ist.

3. Zusammengesetztes Zahnimplantat nach einem der vorstehenden Ansprüche, wobei der Hohlraum durch Bearbeiten des Körpers (101, 201) nach dem additiven Fertigungsverfahren gebildet wird.

4. Zusammengesetztes Zahnimplantat nach einem der vorstehenden Ansprüche, wobei das additive Fertigungsverfahren selektives Laserschmelzen involviert.

5. Zusammengesetztes Zahnimplantat nach einem der vorstehenden Ansprüche, wobei die Schweißnaht zumindest zum Teil durch Laserschweißen des Inlay-Teils (102) an den Körper (101, 201) gebildet wird.

6. Zusammengesetztes Zahnimplantat nach einem der vorstehenden Ansprüche, wobei die Außenfläche des Körpers (101, 201) eine Textur aus dem additiven Fertigungsverfahren beibehält.

7. Zusammengesetztes Zahnimplantat nach einem der vorstehenden Ansprüche, wobei die Außenfläche des additiv gefertigten Körpers (101, 201) eine rauere Oberflächenstruktur aufweist als die Oberfläche des Inlay-Teils (102).

8. Zusammengesetztes Zahnimplantat nach einem der vorstehenden Ansprüche, wobei das Inlay-Teil (102) eine innere Bohrung aufweist.

9. Zusammengesetztes Zahnimplantat nach Anspruch 8, wobei das Inlay-Teil (102) in der inneren Bohrung ein Gewinde aufweist.

10. Zusammengesetztes Zahnimplantat nach Anspruch 8 oder 9, wobei die innere Bohrung eine Indexierungsgeometrie (108, 110) bereitstellt.

11. Zusammengesetztes Zahnimplantat nach einem der Ansprüche 8 bis 10, wobei die innere Bohrung angepasst ist, um mit einem Abutment verbunden zu werden.

12. Zusammengesetztes Zahnimplantat nach einem der vorstehenden Ansprüche, wobei der Klebstoff in dem Hohlraum bereitgestellt ist.

## Revendications

1. Implant dentaire assemblé comprenant :
un corps métallique (101, 201) fabriqué au moins partiellement par un procédé de fabrication additive, ledit corps étant pourvu d'une cavité possédant une ouverture (105) sur une extrémité du corps ; et
une partie d'incrustation (102) au moins partiellement introduite à l'intérieur de la cavité et raccordée de manière étanche au corps métallique, scellant ainsi la cavité,
ladite partie d'incrustation étant raccordée de manière étanche au corps métallique par un cordon de soudure (103) le long de l'ouverture, ledit raccord scellable est au moins partiellement formé d'un adhésif ou d'un époxy ; et
ledit corps étant constitué de titane ou d'un alliage de titane.

2. Implant dentaire assemblé selon la revendication 1, ladite partie d'incrustation (102) étant constituée de titane ou d'un alliage de titane.

3. Implant dentaire assemblé selon l'une quelconque des revendications précédentes, ladite cavité étant formée par usinage du corps (101, 201) après le processus de fabrication additive.

4. Implant dentaire assemblé selon l'une quelconque des revendications précédentes, ledit procédé de fabrication additive impliquant une fusion sélective au laser.

5. Implant dentaire assemblé selon l'une quelconque des revendications précédentes, ladite soudure étant au moins partiellement formée par soudage au laser de la partie d'incrustation (102) au corps (101, 201).

6. Implant dentaire assemblé selon l'une quelconque des revendications précédentes, ladite surface extérieure du corps (101, 201) conservant la texture résultant du processus de fabrication additive.

7. Implant dentaire assemblé selon l'une quelconque des revendications précédentes, ladite surface extérieure du corps (101, 201) obtenue par fabrication additive présentant une structure de surface plus rugueuse que la surface de la partie d'incrustation (102).

8. Implant dentaire assemblé selon l'une quelconque des revendications précédentes, ladite partie d'incrustation (102) présentant un alésage interne.

9. Implant dentaire assemblé selon la revendication 8, ladite partie d'incrustation (102) comportant un filetage dans l'alésage interne.

10. Implant dentaire assemblé selon la revendication 8 ou 9, ledit alésage interne fournissant une géométrie d'indexation (108, 110).

11. Implant dentaire assemblé selon l'une quelconque des revendications 8 à 10, ledit alésage interne étant adapté pour se raccorder à un pilier.

12. Implant dentaire assemblé selon l'une quelconque des revendications précédentes, ledit adhésif étant disposé à l'intérieur de la cavité.
